(19) Europäisches Patentamt
European Patent Office
Office européen des brevets

(11) **EP 3 009 858 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(21) Anmeldenummer: **15002956.9**

(22) Anmeldetag: **16.10.2015**

(51) Int Cl.:
*G01S 13/58* (2006.01)      *G01S 7/03* (2006.01)
*G01S 7/40* (2006.01)        *G01S 13/34* (2006.01)
*G01S 13/536* (2006.01)      *G01S 13/95* (2006.01)
*G01S 13/26* (2006.01)       *G01W 1/14* (2006.01)
*G01S 7/35* (2006.01)

(54) **WOLKENRADAR**

CLOUD RADAR

DISPOSITIF RADAR DE DÉTECTION DES NUAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2014 DE 102014015311**

(43) Veröffentlichungstag der Anmeldung:
**20.04.2016 Patentblatt 2016/16**

(73) Patentinhaber: **METEK Meteorologische Messtechnik GmbH**
**25337 Elmshorn (DE)**

(72) Erfinder: **Peters, Gerhard**
**D-22547 Hamburg (DE)**

(74) Vertreter: **Heinemeyer, Karsten**
**Charlottenstr. 19a**
**23560 Lübeck (DE)**

(56) Entgegenhaltungen:
**EP-A1- 1 777 548          WO-A1-03/044559**
**US-A1- 2003 117 311      US-A1- 2006 097 907**

• **Wikipedia Contributors: "Range ambiguity resolution", , 28 September 2012 (2012-09-28), XP055377903, Retrieved from the Internet: URL:https://web.archive.org/web/20120928011226/https://en.wikipedia.org/wiki/Range_ambiguity_resolution [retrieved on 2017-06-01]**

**Beschreibung**

Die Erfindung betrifft ein Radargerät zur Untersuchung von Nebel und Wolken in der Atmosphäre gemäß dem Oberbegriff des Patentanspruches 1 sowie ein Verfahren zur Bestimmung von Nebel- und Wolkenparametern in der Atmosphäre mit Hilfe von Millimeterwellen nach dem Patentanspruch 9.

Auf dem Gebiet der Atmosphärenerkundung sind unterschiedliche Arten von Wolkenradaren bekannt. Ein Wolkenradar sendet gebündelte elektromagnetische Wellen, die an Objekten bzw. Teilchen, insbesondere in Form von Wassertröpfchen oder Eiskristallen, in der Atmosphäre gestreut werden. Ein kleiner Teil der sich in alle Richtungen ausbreitenden Streusignale kehrt als Echosignal zum Radar zurück und wird dort von der Empfangsantenne empfangen. Aus der Laufzeit des Echos und der Richtung des Radarstrahls kann der Ort des streuenden Objektes ermittelt werden. In Abhängigkeit der Art des Sendesignals können teilweise durch eine weitere Auswertung der Eigenschaften des Echosignals, insbesondere durch Auswertung der Stärke, Phasenlage sowie des Frequenzspektrums, sogar Eigenschaften der in der Atmosphäre befindlichen Objekte bzw. Teilchen detektiert werden.

Für die Beobachtung von Wolken und Nebel werden vielfach Radare verwendet, die elektromagnetische Wellen im Millimeterbereich nutzen. Für längere Wellen, beispielsweise im Zentimeterbereich, sind Wolken praktisch transparent und somit unsichtbar. Kürzere Wellen, wie sie im für Menschen sichtbaren Bereich vorkommen, werden dagegen von Wolken stark gedämpft, so dass keine Information aus dem Inneren einer Wolke erhalten werden kann. Dagegen durchdringen elektromagnetische Wellen im Millimeterbereich Wolken und trotzdem wird ein messbarer Anteil der Sendeleistung zum Radar zurückgestreut. Aus diesem Grund ist es bei Einsatz von Millimeterwellen sogar möglich, dass das Wolkenradar mehrere übereinander liegende Wolkenschichten erfasst. Im Gegensatz hierzu kann ein herkömmliches im Zentimeterbereich arbeitendes Wetterradar nur Niederschlagsteilchen mit einem Durchmesser, der größer als 0,1 mm ist, nicht jedoch vergleichsweise kleine Wolkentröpfen detektieren.

Die Empfindlichkeit eines Wolkenradars ist zwar nicht hoch genug, um ein einzelnes Wolkenteilchen erfassen zu können, dennoch erfolgt die Detektion einer Wolke, da sich innerhalb einer Wolke stets eine große Zahl von Wolkenteilchen im Streuvolumen des Radars befindet. Der typische von einem Wolkenradar zu vermessende Höhenbereich ist 50 bis 10000 m. Bei einem Öffnungswinkel des Radarstrahls von 1° ergibt sich in 1000 m Höhe ein Streuvolumen von etwa 900 m$^3$. Bei einer angenommenen Wolkenteilchendichte von $N_0 = 100$ cm$^{-3}$ tragen somit $9 \times 10^{10}$ Teilchen zum Streusignal bei. Jedes Teilchen erzeugt ein Echosignal, das den Radarempfänger mit einer der Entfernung des Teilchens entsprechenden Phasenverschiebung erreicht. Das resultierende Signal ist die Summe aller Einzelsignale und ist wegen der zufälligen relativen Phasenverschiebung großen Schwankungen unterworfen. Da die relativen Phasenverschiebungen der Einzelbeiträge zwischen 0 und $2\pi$ statistisch gleich verteilt sind, spricht man von inkohärenter Streuung. In diesem Fall ist der Erwartungswert der Leistung des empfangenen Signals gleich der Summe der Streuleistung aller Teilchen.

In Bezug auf das Sendesignal werden zur Untersuchung der Atmosphäre regelmäßig Radare verwendet, die ein frequenzmoduliertes Dauerstrichsignal aussenden und daher auch als Dauerstrichradargeräte oder FMCW-Radare (engl.: Frequency Modulated Continuous Wave) bezeichnet werden.

Der Transceiver eines FMCW-Radars enthält einen Hochfrequenzgenerator, der als ein spannungsgesteuerter Oszillator (engl.: Voltage Controlled Oscillator; VCO) aufgebaut und dessen Ausgangsfrequenz abhängig von einer Steuerspannung ist. Die momentane Frequenz des spannungsgesteuerten Oszillators kann auf unterschiedliche Weise, beispielsweise sägezahnförmig, mit der Periodendauer T verändert werden. Aus den Eigenschaften des auf Grundlage eines derartigen Sendesignals empfangenen Echosignals, insbesondere aus der Stärke, Phasenlage sowie aus dem Frequenzspektrum, kann auf Eigenschaften des Hindernisses, an dem das Sendesignal gestreut wird, geschlossen werden.

Die Modulation des Sendesignals eines FMCW-Radars wird regelmäßig zyklisch vorgenommen. Ein Durchgang von der tiefsten bis zur höchsten bzw. von der höchsten bis zur niedrigsten Frequenz eines Signals wird als Signalfolge oder oft auf Englisch als "Sweep" bezeichnet. Der Frequenzhub eines solchen Sweeps kann einige 100 MHz betragen und bestimmt das räumliche Auflösungsvermögen.

Ein spezifisches Problem des FMCW-Verfahrens besteht darin, dass sowohl die Entfernung als auch die Geschwindigkeit der streuenden Objekte zu einer Frequenzverschiebung führen. Beide Effekte können nur innerhalb eines begrenzten Geschwindigkeitsintervalls, dem sogenannten Nyquistintervall eindeutig getrennt werden. Dieses Intervall ist umso größer je kürzer die Sweepzeit ist. Andereseits ist es für die Funktion des FMCW-Prinzips erforderlich, dass die Laufzeit der Echos kurz gegen die Sweepzeit ist. Daher muss zwischen Geschwindigkeitsmessbereich und Reichweite regelmäßig ein Kompromiss gefunden werden.

Wesentlich an dem FMCW-Verfahren ist, dass mit konstanter Sendeleistung gesendet wird. Da hiermit die verfügbare Senderleistung maximal genutzt wird, ist eine Leistung des Senders von wenigen Watt ausreichend. Sofern die Frequenz des Signals sägezahnförmig moduliert wird, ist auch das durch eine Streuung in der Atmosphäre hervorgerufene Echosignal sägezahnförmig moduliert. Die Frequenz des empfangenen Echosignals ist jedoch gegenüber dem Sendesignal wegen der Laufzeitverschiebung proportional zur Höhe des Messvolumens verschoben. Aus dieser Differenzfrequenz zwischen Ausgangs- und Echosignal, im Folgenden Signalfrequenz genannt, wird schließlich die Messhöhe abgeleitet. Die Steilheit der Frequenzänderung und damit die Sweepzeit hat einen Einfluss auf den eindeutig messbaren Geschwindigkeitsbereich eines FMCW-Radars. Für die Funktion des FMCW-Prinzips ist es erforderlich, dass die maximale Laufzeit des Echos kurz gegen die Sweepzeit ist.

Aus der DE 103 05 139 B4 ist ein FMCW-Radar bekannt, mit dem höhenstufenaufgelöst Informationen über die in den jeweiligen Höhenstufen auftretenden Niederschlagsteilchen gewonnen werden können. Auch bei dieser technischen Lösung wird das Sendesignal frequenzmoduliert und schließlich zunächst aus der Differenzfrequenz zwischen Sende- und Echosignal die Messhöhe, aus der das Echosignal stammt, abgeleitet. Aus den Formen der Dopplerspektren, die durch die Aufbereitung der Echosignale im Empfänger und einer dem Empfänger nachgeschalteten Signalprozessoreinheit gebildet werden, wird auf der Grundlage einer Formanalyse der Spektren die in den unterschiedlichen Höhenstufen auftretenden Niederschlagsarten ermittelt.

Einen limitierenden Faktor bei der Verwendung von FMCW-Radaren stellt die existierende Einschränkung hinsichtlich der Sendeleistung dar. Im Vergleich zu Pulsradaren ist die verwendbare Leistung des Senders eines FMCW-Radars begrenzt, da ein Teil der gesendeten Leistung direkt in den Empfänger gelangt. Schwache Streusignale können aber in Gegenwart eines relativ starken einkoppelnden Sendesignals nicht detektiert werden. Eine übliche Maßnahme zur verbesserten Entkopplung von Sender und Empfänger besteht in der Verwendung getrennter Sende- und Empfangsantennen. Damit geht vor allem im Fall von hoch bündelnden sogenannten Pencil-Beam-Antennen allerdings eine wesentliche, positive Eigenschaft des FMCW-Verfahrens verloren, nämlich die Möglichkeit auch im Nahbereich Teilchen detektieren zu können. Bei scharf bündelnden, separierten Sende- und Empfangsantennen wird erst in größeren Entfernungen eine ausreichende Strahlüberlappung erreicht. Dies ist bei einem Wolkenradar vor allem für Nebelmessungen nachteilig, da Nebelschichten so flach sein können, dass sie komplett unterhalb des Strahl-Überlappungsbereiches liegen und nicht detektiert werden. Ein weiterer Nachteil getrennter Sende- und Empfangsantennen ist, dass die Antenne oft die größenbestimmende der Komponente des Radars ist und damit ein Zwei-Antennen-Aufbau wesentlich voluminöser als ein Ein-Antennen-Aufbau ist.

Aus der WO 03/044559 A1 ist in diesem Zusammenhang ein Windprofiler bekannt, mit dem der Wind in unterschiedlichen Höhen der Atmosphäre messbar ist. Der beschriebene Windprofiler zeichnet sich durch einen speziellen Aufbau aus, durch den die Notwendigkeit zweier Antennen vermieden werden soll. Um dies zu erreichen, arbeitet der beschriebene Windprofiler nach dem sogenannten FMICW-Verfahren (Frequency Modulated Interrupted Continuous Wave). Bei dem beschriebenen Verfahren wird das Sendesignal unterbrochen, wobei der Empfänger nur aktiviert ist, sobald der Sender deaktiviert ist. Die Frequenz, mit der das Sendesignal unterbrochen wird, wird derart gewählt, dass die Leistung des Sendesignals maximiert werden kann. Die genannte Schrift offenbart hierbei, dass die Schaltfrequenz des Sendesignals groß gegenüber der größten auftretenden Signalfrequenz ist. Dies ist bei den typischen Frequenzen, Reichweiten und Entfernungsauflösungen eines Windprofilers realisierbar ausreichend. Aufgrund der genannten Schaltfrequenz von 25 kHz und Signalfrequenzen zwischen 1,6 und 5,6 kHz liegen die durch die Tastung des Sendesignals erzeugten Störfrequenzen weitgehend außerhalb des Signalspektrums und können auf einfache Weise ausgefiltert werden.

Im Vergleich zu Windprofilern, die elektromagnetische Wellen im Dezimeter-Bereich nutzen, kann ein derartiges Verfahren für einen Wolkenradar, das Millimeter-Wellen nutzt, in dieser Form nicht angewendet werden. Die typischen Signalfrequenzen eines Wolkenradars sind je nach verwendetem Frequenzband ($K_a$ or W) um einen Faktor von etwa 20 oder 60 höher. Es ist allerdings nicht möglich, die Tastfrequenz um diesen Faktor zu erhöhen, da bei entsprechend großen Tastfrequenzen, die bei einem $K_a$-Band-Wolkenradar bei etwa 500 kHz liegen würden, bei jedem Vielfachen von 300 m ein blinder Bereich erschiene, über den keine oder nur eingeschränkt Informationen generiert werden könnten. Sofern die Atmosphäre bis in eine Höhe von 10 km hinsichtlich ihrer Wolkenerscheinungen untersucht werden soll, was durchaus ein sinnvoller Wert ist, würden bei Anwendung des in der WO 03/044559 A1 beschriebenen Verfahrens etwa 30 blinde Bereiche vorhanden sein, über die keine Informationen vorliegen. Für ein Wolkenradar ist die beschriebene technische Lösung somit nicht akzeptabel.

US 2003/0117311 A1 bezieht sich auf eine Doppler-Radarvorrichtung zum Beobachten der Doppler-Geschwindigkeit und Intensität von meteorologischen Echos unter Verwendung eines FMICW-modulierten Signals mit einer hohen Pulswiederholungsfrequenz.

Unter Berücksichtigung der aus dem Stand der Technik bekannten Radargeräte bzw. der entsprechenden Verfahren zur Untersuchung der Atmosphäre und den zuvor geschilderten Problemen liegt der Erfindung die Aufgabe zugrunde, ein Wolkenradar derart weiterzubilden, dass trotz eines vergleichsweise kompakten Aufbaus des Gerätes, vorzugsweise mit nur einer Antenne, eine sichere, insbesondere lückenlose Detektion von Nebel- und Wolkenerscheinungen in einem Höhenbereich bis mindestens 10 km ermöglicht wird. Gleichfalls soll sowohl die Detektion von übereinander angeordneten Wolkenschichten als auch von bodennahen Nebelschichten möglich sein. Die Entstehung von blinden Bereichen, in denen keine Messwerte generiert werden können, soll zumindest weitgehend vermieden werden. Hierbei ist gewünscht, dass das Radargerät trotzdem mit vergleichsweise kleinen Sendeleistungen arbeitet und dass der Empfänger mit seiner Mehrzahl elektronischer Komponenten zuverlässig vor Störsignalen aus dem Sender geschützt ist.

Ausgehend von der zuvor geschilderten Aufgabe wird die Erfindung mit Hilfe eines Radargerätes nach Anspruch 1 gelöst. Ein Verfahren, das diese Aufgabe löst, ist in Anspruch 9 angegeben. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft daher ein Radargerät zur Untersuchung von Nebel und Wolken in der Atmosphäre gemäß Anspruch 1.

Über das Tastsignal wird somit sowohl die Unterbrechung des Sendesignals als auch die Abtastung des Empfangs- und/oder Echosignals gesteuert. Vorzugsweise entspricht die Wiederholzeit der Tastung des Sendesignals, also die Zeitspanne von einer Tastung zur nächstfolgenden Tastung, der durch Addition von Sendephase und Sendepause gebildeten Zeitspanne und somit der Abtastfolge des Empfangs- und/oder des Echosignals. Die Schaltfrequenz des Sendesignals entspricht hierbei dem doppelten Wert der Nyquistfrequenz.

Das erfindungsgemäß ausgeführte Radargerät ist somit auf spezielle, für den Einsatz als Wolkenradar geeignete Weise sowohl gegenüber bekannten FMCW- als auch FMICW-Radaren abgewandelt worden. Insbesondere wird durch den Sender ebenfalls ein linear frequenzmoduliertes Dauerstrichsignal erzeugt und über die Senderantenne ausgesendet, wobei eine gezielte Unterbrechung des Sendesignals erfolgt. Dadurch, dass die aus Sendephase und Sendepause gebildete Zeitspanne bzw. die Wiederholzeit der Sendesignaltastung gezielt gleich der Abtastfolge des Echo- und/oder Empfangssignals gesetzt wird, wird ein Wolkenradar zur Verfügung gestellt, das selbst bei der Nutzung einer gemeinsamen Sende- und Empfangsantenne Sendeleistungen erzielt, die mit denen eines Pulsradars vergleichbar sind. Hierzu wird das Sendesignal regelmäßig unterbrochen und der Empfänger nur aktiviert, wenn der Sender ausgeschaltet ist. Im Gegensatz zu Pulsradaren wird die Tastung des Senders allerdings nicht zur Laufzeitmessung verwendet, sondern es wird weiterhin die aus den bekannten FMCW-Verfahren bekannte Signalanalyse für die Entfernungsauflösung verwendet. Wesentlich für die Realisierung der Erfindung bei Wolkenradaren, die Millimeterwellen aussenden, ist jeweils, dass die aus Sendephase und Sendepause gebildete Gesamtzeit gleich der Abtastfolge, der Abtast- und des Empfangssignals ist.

Das Tastverhältnis

$$V \equiv \frac{\tau_t}{\tau_t + \tau_r}$$

ist als Verhältnis von Sendezeit bzw. Sendephase zur aus Sendephase und Sendepause gebildeten Gesamtzeitspanne definiert und kann in weiten Grenzen variiert werden.

Gemäß der Erfindung wird die Tastung des Sendesignals derart ausgeführt, dass das Tastverhältnis nahezu eins ist, also einem Dauerstrichsignal angenähert wird, wodurch eine dem FMCW-Verfahren vergleichbare Nutzung der Senderleistung erzielt wird. Vorzugsweise liegt das Tastverhältnis V in einem Bereich zwischen 0,85 und 1, es sollte somit bevorzugt 0,85 ≤V < 1, insbesondere 0,9 ≤ V < 1 gelten.

Durch die erfindungsgemäße periodische Tastung von Sender und Empfänger wird eine höhenabhängige Empfindlichkeit G (Δt₀) erzeugt, die allgemein durch das Integral

$$G(\Delta t_0) = \frac{1}{t} \int_0^t s(t' - \Delta t_0) e(t') \, dt'$$

beschrieben wird, wobei s(t) die Senderleistung und e(t) die Leistungsverstärkung des Empfänger ist. Wird davon ausgegangen, dass die Senderleistung und die Leistungsverstärkung des Empfängers unendlich schnell jeweils zwischen 0 und 1 hin und her geschaltet werden können, erhält man für den erfindungsgemäßen Fall, dass die Sendephase größer als die Sendepause ist, eine Funktion bestehend aus einer mit $\tau_g$ periodischen Folge von Trapezen. Die maximale Empfindlichkeit wird in den Höhenbereichen $\tau_r + m\tau_g < \Delta t_0 \le \tau_t + m\tau_g$ erreicht, mit $\tau_g = \tau_t + \tau_r$ und m = 1, 2,3..., wobei $\tau_g$ der aus Sendephase $\tau_t$ und Sendepause $\tau_r$ gebildeten Gesamtzeitspanne, die gleich der Zeitspanne zwischen zwei Tastungen des Sendesignals ist, entspricht.

Die periodische Signalunterbrechung hat im Allgemeinen gravierende Auswirkungen auf das Spektrum des Empfangssignals und wird auf vorteilhafte Weise entsprechend berücksichtigt. In einer speziellen Weiterbildung der Erfindung wird die Unterbrechung des Sendesignals durch Multiplikation des Empfangssignals mit einer periodischen Rechteckfunktion mit den Werten 1 und 0 beschrieben.

In Bezug auf die höhenabhängige Empfindlichkeit $G(\Delta t_0)$, die durch die weiter oben gezeigte Funktion beschrieben wird, ist noch ein weiterer Faktor zu berücksichtigen , der von der Phasendifferenz zwischen Signalabtastung und Empfängertastung abhängt. Aus diesem Grund werden die Empfängerabschaltung und die Signalabtastung vorzugsweise phasenstarr gekoppelt, so dass dieser Faktor eine entfernungsabhängige Konstante ist, die dann als Bestandteil der Radarkalibrierung berücksichtigt wird.

Wird die Empfindlichkeit des Radargeräts derart eingestellt, dass diese durch eine, wie oben erläutert, trapezförmige Funktion, die ihre Extremwerte bei 0 und 1 hat, beschrieben wird, so erscheinen bei Δt₀ = m$\tau_g$ "blin-

de Bereiche" mit $G = 0$. Die Halbwertsbreite dieser blinden Bereiche ist gleich der Sendepause $\tau_r$. Auf bevorzugte Weise wird daher eine möglichst kurze Empfangszeit, also eine nur kurze Aktivierung des Empfängers, gewählt, um so die Halbwertsbreite zu vermindern.

Gemäß einer besonderen Weiterbildung wird die aus Sendephase und Sendepause gebildete Zeitspanne bzw. Wiederholzeit der Tastung des Sendesignals $\tau_g$ zwischen aufeinanderfolgenden Messungen variiert. Vorzugsweise wird hierbei das Tastverhältnis V beibehalten, und so die Funktion der Empfindlichkeit $G(\Delta t_0)$ linear gestreckt oder gestaucht, so dass blinde Bereiche aufgefüllt werden.

Gemäß der Erfindung wird die Empfangszeit möglichst kurz gehalten um das Auftreten spezieller blinder Bereiche, für die keine Messwerte vorliegen, in speziellen Höhen der Atmosphäre zu vermeiden, wobei ein besonders bevorzugtes Tastverhältnis von 0,85 bis 0,95, insbesondere von 0,9 gewählt wird. Vorzugsweise wird während der Variation der Tastwiederholzeit die phasenstarre Kopplung mit der durch die Signalerzeugungseinheit vorgegebenen Abtastfolge des Echo- und/oder des Empfangssignals beibehalten.

In einer speziellen Ausführungsform der Erfindung sind die Sende- und Empfangsantenne in eine Antenne integriert, wobei ein Zirkulator als Sende- und Empfangsweiche vorgesehen ist. Bevorzugt wird als derart kombinierte Antenne eine Parabolantenne verwendet.

Gemäß einer weiteren besonderen Weiterbildung ist dem Zirkulator empfängerseitig ein Mikrowellenschalter, der wenigstens eine PIN-Diode aufweist, nachgeschaltet. Dieser Mikrowellenschalter stellt sicher, dass der im Empfänger vorgesehene Empfangsverstärker zuverlässig gegen das durch den Zirkulator auf verschiedenen Wegen einkoppelnde Sendesignal, etwa durch unvollkommene Isolation des Zirkulators und/oder Antennen-Fehlanpassung geschützt wird. Bevorzugt wird dieser Mikrowellenschalter ebenfalls über die Signalerzeugungseinheit mit einem Steuersignal unter Berücksichtigung des Tastsignals angesteuert.

In einer weiteren Ausführungsform der Erfindung wird das vom Mischer erzeugte niederfrequente Empfangssignal auf einen Niederfrequenzschalter geleitet. Dieser Niederfrequenzschalter ist erforderlich, um eine Isolierung des Sendesignals zu erzeugen. Da während der Sendephase, bedingt durch stochastische Signalanteile des spannungsgesteuerten Oszillators und weitere Beiträge durch den schaltbaren Leistungsverstärker des Senders, am Ausgang des Leistungsverstärkers ein starkes stochastisches Signal vorhanden ist, das die schwachen Echosignale verdecken würde, ist eine derartige Isolierung des Sendesignals sinnvoll.

Eine weitere Funktion des Niederfrequenzschalters besteht darin, die Spannung der gerade vergangenen Empfangsphase zu speichern und die großen Spannungsschwankungen zwischen Sende- und Empfangsphase am Mischerausgang vom folgenden Niederfrequenzverstärker fernzuhalten. Diese Speicherfunktion reduziert die Dynamikanforderungen an den Niederfrequenzverstärker auf ein technisch handhabbares Maß. Der Niederfrequenzverstärker ist vorzugsweise ein Anti-Aliasing-Tiefpassfilter, der die Signalinformation während der Empfangsphase auf die Zeit $t_s$, also die Abtastfolge verteilt, so dass der exakte Zeitpunkt der AD-Wandlung innerhalb der Abtastfolge $t_s$ nicht kritisch ist.

Im Anschluss an den Niederfrequenzverstärker ist eine Signalprozesseinheit vorgesehen, in der die Signalverarbeitung zur Bereitstellung von Informationen über die in der Atmosphäre herrschenden Wolken- und Nebelerscheinungen erzeugbar sind. Die Signalverarbeitung unterscheidet sich hierbei prinzipiell nicht von denen, die in herkömmlichen FMCW-Radaren verwirklicht sind und beruht im Wesentlichen auf einer Frequenzanalyse des herabgemischten frequenzmodulierten Empfangssignals. Aufgrund der verwendeten Funktion für die höhenspezifische Empfindlichkeit wird weiterhin bevorzugt eine spezielle entfernungsabhängige Kalibrierung durchgeführt.

Gemäß einer speziellen Ausführungsform ist der Empfänger, insbesondere der Mischer derart ausgeführt, dass das Echosignal in einem Schritt auf die niedrigste mögliche Frequenz herabgemischt und als Empfangssignal bereitgestellt wird. Alternative Ausführungsformen mit einer oder mehrerer Zwischenfrequenzen sind allerdings ebenfalls denkbar. Ebenfalls ist die Digitalisierung wenigstens einer dieser Zwischenfrequenzsignale möglich.

Neben einem speziellen Wolkenradar betrifft die Erfindung auch ein Verfahren zur Bestimmung von Nebel- und Wolkenparametern in der Atmosphäre mithilfe von Millimeterwellen gemäß Anspruch 9.

Auf bevorzugte Weise entspricht die Wiederholzeit der Tastung des Sendesignals der aus Sendephase und Sendepause gebildeten Zeitspanne. Außerdem ist die durch Addition von Sendephase und Sendepause des Sendesignals gebildete Zeitspanne im Rahmen des technisch Möglichen gleich einer Periode der Abtastung des Echo- und / oder des Empfangssignals im Empfänger ist.

Gemäß einer speziellen Ausführungsform der Erfindung ist vorgesehen, dass als Sendesignal ein Mikrowellensignal mit einer Leistung von 4 W, und einer Frequenz zwischen 35,10 und 35,11 GHz erzeugt wird. Bevorzugt wird das Sendesignal durch eine in der Signalerzeugungseinheit erzeugte Modulationsspannung sägezahnförmig moduliert.

Bevorzugt wird das Sendesignal, bevor es der Sendeantenne zugeleitet wird, von einem schaltbaren Leistungsverstärker verstärkt, der mithilfe eines von der Signalerzeugungseinheit erzeugten Steuersignals unter Berücksichtigung des Tastsignals geschaltet wird. Gemäß einer besonders bevorzugten Weiterbildung wird das Steuersignal um eine Totzeit gegenüber dem Tastsignal verzögert auf einen Schalteingang des Leistungsverstärkers geleitet.

In einer speziellen Ausführungsform wird während der Sendephase ein Signalweg für das Sendesignal zur Sendeantenne durchgeschaltet und ein Signalweg vom Sender zum Empfänger gesperrt, wobei auf dem Signalweg vom Sender zur Sendeantenne eine Dämpfung um ein vielfaches höher eingestellt wird als auf dem Signalweg zwischen Sender und Empfänger. Hierbei wirkt der Zirkulator als Sende-Empfangsweiche. Der Weg vom Senderausgang zur Antenne ist durchgeschaltet und der Weg vom Sender zum Empfangszweig gesperrt. Unter Durchgeschaltet wird in diesem Fall verstanden, dass das Signal um weniger als 1 dB gedämpft wird, gesperrt meint, dass das Signal um mehr als 20 dB gedämpft wird.

In einer weiteren Ausführungsform ist es denkbar, dass im Empfänger vor dem Vorverstärker ein Schalter angeordnet ist, der während einer Sendepause für das Echosignal durchgeschaltet wird. Vorzugsweise wird der vor dem Vorverstärker angeordnete Schalter mithilfe eines von der Signalerzeugungseinheit erzeugten Steuersignals unter Berücksichtigung des Tastsignals geschaltet. Hierbei ist es besonders bevorzugt, wenn der vor dem Vorverstärker angeordnete Schalter bereits vor Ende der Sendephase durchgeschaltet wird. Durch das frühzeitige Schalten noch vor dem Ende des Sendeimpulses wird eine gewisse Trägheit, die der Schalter besitzt, ausgeglichen.

Gemäß einer weiteren speziellen Gestaltung der Erfindung wird das vom Mischer erzeugte niederfrequente Empfangssignal auf einen Niederfrequenzschalter geleitet. Bevorzugt wird der Niederfrequenzschalter mithilfe eines von der Signalerzeugungseinheit erzeugten Steuersignals unter Berücksichtigung des Tastsignals geschaltet. Auf vorteilhafte Weise erfolgt das Schalten des Niederfrequenzschalters, und somit die Durchschaltung für das niederfrequente Empfangssignal, um eine Sicherheits-Totzeit verzögert nach Ende der Sendephase. Dieser schnelle Schalter wird somit mit einer Sicherheits-Totzeit nach dem Ende des Sendepulses aktiviert.

Im Folgenden wird die Erfindung anhand von Ausführungsbeispielen ohne Beschränkung des allgemeinen Erfindungsgedankens unter Zuhilfenahme von Figuren näher erläutert. Dabei zeigen:

Figur 1:      Prinzipschaltbild eines erfindungsgemäß ausgeführten Wolkenradars;

Figur 2:      Darstellung des Tast- sowie der verwendeten Steuersignale sowie

Figur 3:      Darstellung der höhenabhängigen Radarempfindlichkeit in zwei unterschiedlichen Fällen.

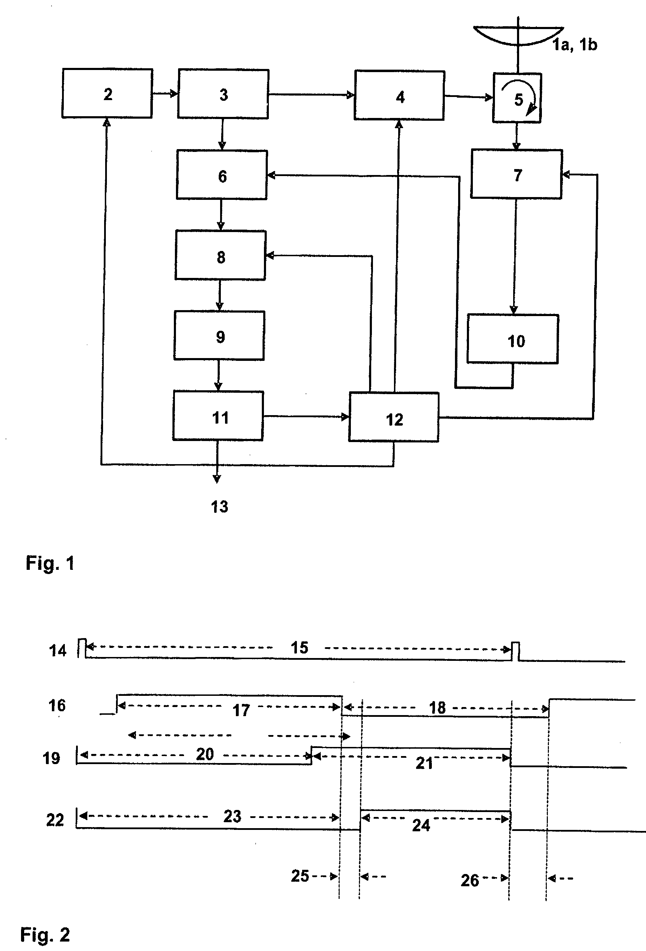

Figur 1 zeigt in einem Prinzipschaltbild den Aufbau eines erfindungsgemäß ausgeführten Wolkenradars, das für die Erfassung von meteorologischen Variablen, insbesondere Nebel, Wolken und Niederschlag geeignet ist. Ferner enthält Figur 2 einen Signallaufplan, in dem die zeitliche Abfolge des Tastsignals sowie der von der Signalerzeugungseinheit 12 erzeugten Steuersignale dargestellt ist. Gleiche Bauteile bzw. Signale sind mit den gleichen Bezugszeichen gekennzeichnet.

Im spannungsgesteuerten Oszillator 2 wird ein Mikrowellensignal mit 50 mW Leistung und einer Frequenz im Bereich 35,10 bis 35,11 GHz erzeugt. Das Signal wird sägezahnförmig durch die in der Signalerzeugungseinheit 12 erzeugte Modulationsspannung frequenzmoduliert. Das Ausgangssignal des spannungsgesteuerten Oszillators 2 gelangt über den Leistungsteiler 3 auf den L0-Eingang des Mischers 6 und auf den Eingang des schaltbaren Leistungsverstärkers 4. Der verwendete Mischer 6 verfügt über zwei Eingänge, nämlich zum einen den LO-Eingang für das frequenzmodulierte Signal des spannungsgesteuerten Oszillators und zum anderen für das zu mischende Echo-Mikrowellen-Signal und einen IF-Ausgang für das in der Frequenz heruntergemischte Empfangssignal.

Das ebenfalls in der Signalerzeugungseinheit 12 erzeugte Tastsignal 16 wird durch den ADC-Abtastpuls 14 mit einer Sicherheits-Totzeit 26 auf den Schalteingang des Leistungsverstärkers 4 geleitet. Auf diese Weise wird der Leistungsverstärker 4 zyklisch an- und ausgeschaltet, so dass das Sendesignal im Anschluss an eine Sendephase für eine Sendepause unterbrochen wird.

Während der Abschaltung in der Sendepause ist der Leistungsverstärker 4 deaktiviert und erzeugt auch kein elektronisches Rauschen an seinem Ausgang. Das getastete Sendesignal mit einer Leistung von 4 W gelangt über den Zirkulator 5 auf die hochbündelnde Parabolantenne, die als kombinierte Sende- und Empfangsantenne 1a, 1b ausgeführt ist. Der Zirkulator 5 wirkt als Sende-Empfangsweiche, wobei während der Sendephase der Weg vom Senderausgang zur Antenne durchgeschaltet und der Weg vom Sender zum Empfangszweig gesperrt ist. Unter dem Ausdruck "durchgeschaltet" ist hierbei zu verstehen, dass das Signal um weniger als 1 dB gedämpft wird, "gesperrt" bedeutet, dass das Signal um mehr als 20 dB gedämpft wird. Durch diese unvollkommene Isolation gelangt während der Sendephase etwa ein Prozent der Sendeleistung, in diesem Fall somit 40 mW, in den Empfangszweig. Der Signalweg von der Antenne zum Empfangszweig ist dagegen nicht gesperrt.

Die während der Sendephase 17 in den Empfangszweig eindringende Leistung ist teilweise sogar erheblich höher als die oben genannten 40 mW, da durch Fehlanpassung der Antenne ein Teil der Sendeleistung direkt von der Antenne reflektiert und durch den Zirkulator in den Empfangszweig geleitet wird.

Aus diesem Grund ist zwischen dem Zirkulator 5 und dem rauscharmen Empfangsverstärker 10 ein Mikrowellenschalter 7 mit wenigstens einer PIN-Diode vorgesehen, der den empfindliche Eingang des Empfangsverstärkers 10 gegen das durch den Zirkulator auf verschiedenen Wegen einkoppelnde Sendesignal schützt. Der Mikrowellenschalter 7 wird mit dem Steuersignalsignal 19, das ebenfalls die Signalerzeugungseinheit 12 in Abhängigkeit des Tastsignals erzeugt, gesteuert. Dieser Mikrowellenschalter 7 sperrt beginnend mit dem Triggerimpuls 14 des Tastsignals das Empfangssignal über die Zeit 20. Da der Mikrowellenschalter 7 mit PIN-Diode eine gewisse Trägheit besitzt, wird das Steuersignal zum Durchschalten schon vor dem Ende des Sendeimpulses erzeugt.

Durch den Empfangsverstärker 10 wird das Echosignal verstärkt und auf den RF-Eingang des Mischers 6 geleitet. Durch den Mischer wird das Echosignal zu einem niederfrequenten Empfangssignal transformiert und dieses in den Niederfrequenzbereich gemischte Empfangssignal wird dann auf einen Niederfrequenzschalter 8 geleitet, der wiederum von der Signalerzeugungseinheit 12 unter Berücksichtigung des Tastsignals mit dem Signal 22 gesteuert wird. Dieser schnelle Niederfrequenzschalter 8 wird mit einer Sicherheits-Totzeit 25 nach dem Ende des Sendepulses aktiviert. Dieser Schalter 8 ist notwendig, da der Mikrowellenschalter 7 zwar den Empfangsverstärker 10 vor Zerstörung schützt, aber das Sendesignal nicht ausreichend isoliert. Während der Sendephase ist, bedingt durch stochastische Signalanteile des spannungsgesteuerten Oszillators und weiterer Beiträge durch den Leistungsverstärker 4, am Ausgang des Empfangsverstärkers 10 ein starkes stochastisches Signal vorhanden, das die schwachen Echosignale verdecken würde. Eine weitere Funktion des Niederfrequenzschalters 8 besteht darin, die Spannung der gerade vergangenen Empfangsphase zu speichern und die großen Spannungsschwankungen zwischen Sende- und Empfangsphase am Mischer-Ausgang vom folgenden Niederfrequenzverstärker 9 fernzuhalten.

Diese Speicher-Funktion reduziert die Dynamikanforderungen an den Niederfrequenzverstärker 9 auf ein technisch bequem handhabbares Maß. Bestandteil des Niederfrequenzverstärkers 9 ist ein Anti-Aliasing-Tiefpassfilter. Hierdurch wird die Signalinformation während der Empfangsphase auf die Zeit $t_s$ verteilt und der exakte Zeitpunkt der AD-Wandlung innerhalb von $t_s$ ist daher nicht kritisch.

Die weitere im Signalprozessor stattfindende Signalverarbeitung unterscheidet sich prinzipiell nicht vom herkömmlichen FMCW-Radar. Durch die oben beschriebenen $G(\Delta t_0)$-Profile ist eine etwas komplexere entfernungsabhängige Kalibrierfunktion anzuwenden.

In dem hier vorgestellten Ausführungsbeispiel wurde das Empfangssignal in einem Schritt auf die niedrigste mögliche Frequenz herabgemischt. Andere Ausführungen mit einer oder mehreren Zwischenfrequenzen sind ebenfalls möglich - inklusive der Digitalisierung einer Zwischenfrequenz Digitalempfänger). Dies kann im Detail Vorteile gegenüber der beschriebenen Ausführung mit sich bringen, ändert aber nichts an dem Prinzip, Sender und Empfänger zu tasten und die Entfernungszuordnung durch Frequenzanalyse des herabgemischten frequenzmodulierten Signals zu ermitteln.

Figur 2 enthält einen Signallaufplan der für das gemäß Figur 1 ausgeführte Radargerät verwendeten Tast- und Steuersignale. Zunächst wird durch die Signalerzeugungseinheit 12 ein periodisch wiederkehrendes Tastsignal bzw. Tastimpuls 14 mit der Tastwiederholzeit 15 erzeugt. Die Tastwiederholzeit 15 entspricht bei einem erfindungsgemäß ausgeführten und/oder betriebenen Radargerät Abtastfolge des Empfängers sowie der durch Addition von Sendephase und Sendepause gebildeten Zeitspanne $\tau_g$.

In Abhängigkeit des Tastsignals bzw. des entsprechenden Abtastimpulses 14 wird von der Signalerzeugungseinheit ein Steuersignal 16 erzeugt, über das der zwischen dem spannungsgesteuerten Oszillator und der Sendeantenne angeordneten schaltbare Leistungsverstärker 4 des Senders zyklisch an- und ausgeschaltet wird. Hierbei wird das in der Signalerzeugungseinheit generierte Steuersignal um eine Sicherheits-Totzeit 26 gegenüber dem Abtastimpuls verzögert auf den Schalteingang des Leistungsverstärkers gesendet.

Durch die periodische Tastung des Sendesignals werden Sendephasen regelmäßig durch Sendepausen unterbrochen, wobei bevorzugt das Tastverhältnis V, für das

$$V \equiv \frac{\tau_t}{\tau_t + \tau_r}$$

gilt, auf einen Wert von $0{,}9 < V \leq 1$ eingestellt wird. Die Ansteuerung des Leistungsverstärkers 4 durch das Steuersignal 16 bewirkt somit, dass der Leistungsverstärker während der Sendephase $\tau_t$ 17 durchgeschaltet und während der Sendepause $\tau_r$ 18 gesperrt ist.

Weiterhin wird in Abhängigkeit des erzeugten Tastsignals 14 ein Steuersignal 19 zur Ansteuerung des Mikrowellenschalters 7, der den rauscharmen Empfangsverstärker vor unzulässigen Signalen schützt, erzeugt. Hierdurch wird beginnend mit dem Triggerimpuls des Tastsignals 14 das empfangene Echosignal über die Zeitspanne 20 gesperrt. Da der Mikrowellenschalter 7 eine gewisse Trägheit besitzt, wird das Steuersignal 19 zum Durchschalten dieses Schalters 7 bereits vor dem Ende der Sendephase 17 erzeugt. Der Mikrowellenschalter 7 wird somit bereits vor Ende der Sendephase 17 durchgeschaltet, verbleibt über eine Zeitspanne 21 in dieser Schaltstellung und wird wiederum bereits vor Ende der Sendepause 18 wieder in Sperrrichtung geschaltet.

Ferner wird mittels der Signalerzeugungseinheit 12 in Abhängigkeit des Tastsignals 14 ein Steuersignal zur Ansteuerung des Niederfrequenzschalters 8 des Empfängers erzeugt. Dieser schnelle Schalter 8 wird mit der Sicherheits-Totzeit 25 nach dem Ende der Sendephase 17 aktiviert. Dieser Schalter realisiert eine notwendig Isolierung gegenüber dem Sendesignal, speichert die Spannung der gerade vergangenen Empfangsphase und hält die großen Spannungsschwankungen zwischen Sende- und Empfangsphase am Ausgang des Mischers 6 vom folgenden Niederfrequenzverstärker 9 fern.

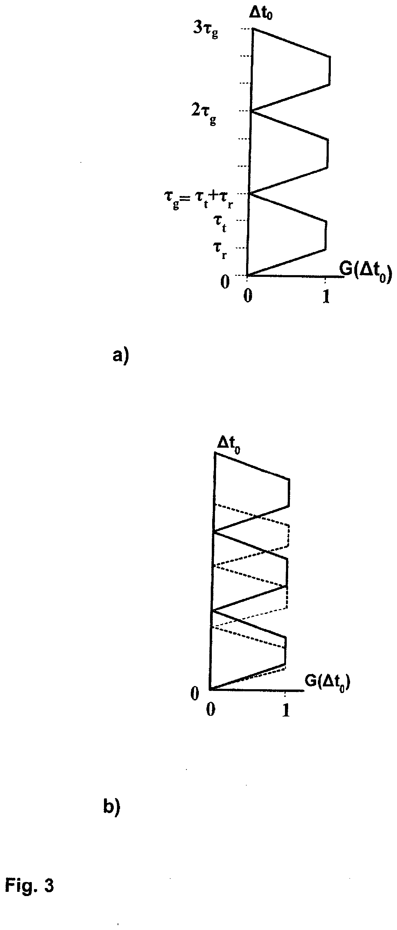

Figur 3 zeigt in zwei grafischen Darstellung die Höhenabhängigkeit der Radarempfindlichkeit als Funktion der Signallaufzeit $\Delta t_0$, wobei Fig. 3a) ein Empfindlichkeitsprofil und Fig. 3b) zwei überlagerte Empfindlichkeitsprofile mit unterschiedlicher Tastperiode aber gleichem Tastverhältnis darstellen.

Generell wird durch die periodische Abtastung von Sender und Empfänger eine höhenabhängige Empfindlichkeit $G(\Delta t_0)$ des Radargeräts erzeugt, die durch das Integral

$$G(\Delta t_0) = \frac{1}{t} \int_0^t s(t' - \Delta t_0) e(t') \, dt'$$

beschrieben wird, wobei s(t) die Senderleistung und e(t) die Leistungsverstärkung des Empfängers ist. Das in Figur 3a) gezeigte Empfindlichkeitsprofil beruht auf der Annahme, dass *s(t)* und *e(t)* zwischen Eins und Null mit unendlich kurzen Flanken geschaltet werden und die Sendephase größer als die Sendepause ist, also $\tau_t > \tau_r$ gilt.

Die Funktion besteht aus einer mit $\tau_g$, also mit der aus Sendephase und Sendepause gebildeten Zeitspanne, periodischen Folge von Trapezen, wobei eine maximale Empfindlichkeit in den Höhenbereichen $\tau_r + m\tau_g < \Delta t_0 \leq \tau_t + m\tau_g$ erreicht; hierfür gilt mit $\tau_g = \tau_t + \tau_r$ und m = 1,2,3...

Wie Figur 3a) zu entnehmen ist, erscheinen "blinde Bereiche", die bei einer Signallaufzeit $\Delta t_0 = m\tau_g$ zentriert sind, wo gilt G = 0. Die Halbwertsbreite dieser blinden Bereichen ist gleich der Sendepause $\tau_r$. Um die Halbwertsbreite zu vermindern, ist also eine möglichst kurze Empfangszeit anzustreben. Um blinde Bereiche aufzufüllen, wird die Tastwiederholzeit, also die aus Sendephase und Sendepause gebildete Zeitspanne, $\tau_g$ zwischen aufeinanderfolgenden Messungen, also die Analyseintervalle $t_a = NT$), variiert. Wird dabei das Tastverhältnis V beibehalten, so wird das $G(\Delta t_0)$-Profil linear gestreckt oder gestaucht. Eine entsprechende Stauchung wird in Figur 3 b) mit Hilfe des gestrichelten Profils angedeutet. In diesem Zusammenhang ist zu beachten, dass aufgrund des erfindungsgemäß vorgesehenen Gleichsetzens der Wiederholzeit der Tastung des Sendesignals $\tau_g$ mit der Abtastfolge $t_s$ die Wirkung der Empfängertastung die gleiche wie die der ohnehin stattfindenden Signalabtastung ist. Eine zusätzliche frequenzabhängige Beeinflussung des Originalspektrums durch die Empfängertastung tritt daher nicht auf. Ein zusätzlicher zur $G(\Delta t_0)$-Funktion erscheinender höhenabhängiger Faktor, der von der Phasendifferenz zwischen Signalabtastung und Empfängertastung abhängt, ist eine Konstante, sofern die Empfängerabschaltung und die Signalabtastung phasenstarr gekoppelt sind. Eine derartige Konstante kann auf bevorzugte Weise als Bestandteil der Radarkalibrierung berücksichtigt werden. Bei einer Variation der Wiederholzeit der Tastung des Sendesignals $\tau_g$, also der Tastperiode bzw. Tastwiederholzeit, wie sie der Darstellung zweier Empfindlichkeitsprofile in Figur 3b) zugrunde liegt, ist die phasenstarre Kopplung mit der durch die Signalerzeugungseinheit 12 generierten Abtastfolge $t_s$ beizubehalten.

Die in der dem Niederfrequenzverstärker 9 sowie dem an diesen angeschlossenen AD-Wandler nachgeschalteten Signalprozessoreinheit stattfindende Signalverarbeitung unterscheidet sich grundsätzlich nicht von der in herkömmlichen FMCW-Radaren ausgeführten Verarbeitung. Insbesondere wird hier das Echosignal bzw. das gemischte niederfrequente Empfangssignal im Hinblick auf die Stärke, Phasenlage sowie das Frequenzspektrum ausgewertet und hieraus höhenstufenaufgelöst Informationen 13 über das Auftreten und die Eigenschaften von Wolken und/oder von Nebel erzeugt.

Der Signalauswertung liegen im Wesentlichen folgende Überlegungen zu Grunde. Die Frequenz eines Echosignals, das durch Reflexion des Sendesignals an einem Teilchen in der Atmosphäre entstanden ist und daraufhin zu einem bestimmten Zeitpunkt wieder von der Empfangsantenne empfangen wird, unterscheidet sich hinsichtlich seiner Frequenz von der Frequenz des zu diesem Zeitpunkt gesendeten Sendesignals durch einen Betrag, der einerseits von der Signallaufzeit, und damit vom Abstand des Teilchens vom Radargerät und andererseits von der Dopplerverschiebung und damit von der Relativgeschwindigkeit des Teilchens in der Atmosphäre abhängig. Im Empfänger des Radargeräts wird das empfangene Signal im Mischer mit dem zu diesem Zeitpunkt erzeugten Sendesignal gemischt. Aufgrund der erfindungsgemäßen Ausführung des Radargeräts wird dieses Sendesignal, in der Zeit, in der der Empfänger aktiviert ist, nicht an die Antenne weitergeleitet, da zu dieser Seite das Aussenden des Signals durch Ausschalten des Leistungsverstärkers unterbrochen ist. Als Mischprodukt wird ein niederfrequentes Signal erzeugt, dessen Frequenz dem Frequenzunterschied zwischen der Frequenz des Sendesignals und der Frequenz des Echosignals entspricht. Dieses niederfrequente Signal wird dann im Analog/Digital-Wandler mit einer geeigneten Zeitauflösung digitalisiert. Die digitalisierten Daten werden über eine bestimmte Aufzeichnungsperiode aufgezeichnet, die bevorzugt der Länge der Rampe entspricht, mit der das gesendete Signal moduliert wird. Aus dem so erhaltenen Datensatz wird dann mittels schneller Fouriertransformation (FFT), ein Spektrum erzeugt. In diesem Spektrum wird jedes erfasste Teilchen durch einen Peak repräsentiert, der sich mehr oder weniger deutlich vom Rauschpegel abhebt. Durch Wiederholung dieser Prozedur ist es möglich, die Mehrdeutigkeit zwischen der laufzeitbedingten Frequenzverschiebung und der Dopplerverschiebung zu beseitigen, so dass sich der Abstand zum Radargerät und die Relativgeschwindigkeit des Teilchens berechnen lassen. Aus der Summe der teilchenspezifischen Ergebnisse werden schließlich die höhenstufenaufgelösten Informationen 13 über das Auftreten und die Eigenschaften von Wolken und/oder von Nebel erzeugt.

In einem speziellen Ausführungsbeispiel beträgt die Frequenz des Sendesignals $f_1$ = 35.1 GHz. Dies ist die für meteorologische Radare zugewiesene und für Wolkenbeobachtungen geeignete Frequenz. Der Frequenzhub B des Senders ist im Bereich 0 < B ≤ 10 MHz einstellbar. Dies entspricht einer Entfernungsauflösung im Bereich 15 m ≤ δr < ∞. Die Abtastfolge ist im Bereich $3 \mu s \le t_s = \tau_g \le 4 \mu s$ variabel. Sie wird nach jedem Analyse-Intervall $t_a$ ,für das

$$t_a = NT = 2MNt_s$$

gilt, in Stufen umgeschaltet, so dass sich drei Messgruppen mit den folgenden Abtastfolgen ergeben:
Die Anzahl der räumlichen Auflösungszellen (Range Gates $M$) und die Anzahl der Dopplerlinien $N$ in jedem Spektrum werden dabei nicht verändert und betragen $M$ = 256 sowie $N$ = 32. Daraus folgt für die Sweep Zeiten

$T_1$ = 0,768 ms
$T_2$ = 0,852 ms
$T_3$ = 1,024 ms

und für die Analysezeiten

$t_{a1}$ = 24,576 ms
$t_{a2}$ = 27,306 ms
$t_{a3}$ = 32,768 ms

Die Doppler Spektren werden zu einem 10s-Mittelwert aufsummiert, wobei zu berücksichtigen ist, dass von dieser Zeit ca. 2 s für Rechenzeit verbraucht werden, so dass also nur 8 s für die Signalerfassung zur Verfügung stehen. In dieser Zeit können etwa 130 Spektren aus jeder Messgruppe gemittelt werden.

Die unterschiedlichen Sweep-Zeiten haben entsprechend unterschiedliche Grenzgeschwindikeiten, für die

$$\dot{r}_u = \lambda/(2T)$$

gilt, zur Folge:

$\dot{r}_{u1}$ = 5,56 m/s
$\dot{r}_{u2}$ = 5,01 m/s
$\dot{r}_{u3}$ = 4,17 m/s

Die Bedingung $\Delta t_0 \ll T$ wird auch für die kürzeste Sweep-Zeit erfüllt, wenn man sich auf Entfernungen max(r) ≪ $cT_1/2$ = 115,2 km beschränkt. Da für ein erfindungsgemäß ausgeführtes Radargerät ein Höhenbereich bis 10 km von besonderem Interesse ist, ist in dem hier beschriebenen Fall mit max($r$)~10 km dieses Kriterium erfüllt.

**Bezugszeichenliste**

| | |
|---|---|
| 1a | Sendeantenne |
| 1b | Empfangsantenne |
| 2 | Spannungsgesteuerter Oszillator |
| 3 | Leistungsteiler |
| 4 | Schaltbarer Leistungsverstärker |
| 5 | Sende-Empfangsweiche (Zirkulator) |
| 6 | Mischer |
| 7 | Mikrowellenschalter |
| 8 | Niederfrequenzschalter |
| 9 | Niederfrequenzverstärker |
| 10 | Rauscharmer Empfangsverstärker |
| 11 | Analog-Digitalwandler und Signalprozessor |
| 12 | Signalerzeugungseinheit zur Erzeugung der Steuersignale |
| 13 | Prozessierte Radardaten |
| 14 | Tastsignal des ADC (Abtastimpuls) |
| 15 | Wiederholzeit $\tau_g$= aus Sendephase und Sendepause gebildete Zeitspanne |
| 16 | Steuersignal für den Leistungsverstärker des Senders |
| 17 | Sendephase $t_t$ |
| 18 | Sendepause $\tau_g$- $t_t$ |
| 19 | Steuersignal für den Mikrowellenschalter |
| 20 | Mikrowellenschalter aus |
| 21 | Mikrowellenschalter ein |
| 22 | Steuersignal für den Niederfrequenzschalter |
| 23 | Niederfrequenzschalter aus |
| 24 | Niederfrequenzschalter ein |
| 25 | Totzeit 1 $t_{d1}$ |
| 26 | Totzeit 2 $t_{d2}$ |

**Patentansprüche**

1. Radargerät zur Untersuchung von Nebel und Wolken in der Atmosphäre mit einem Sender zur Erzeugung eines frequenzmodulierten Sendesignals, das über eine Sendeantenne (1a) ausgesendet wird, mit einem Empfänger, dem über eine Empfangsantenne (1b) ein Echosignal zugeleitet wird, das durch Reflexion des Sendesignals an Flüssigkeitstropfen und/oder an Eiskristallen erzeugt wird, und der einen Mischer (6) aufweist, dem das empfangene und von einem Vorverstärker (10) verstärkte Echosignal zuleitbar ist und durch den das verstärkte Echosignal in ein niederfrequentes Empfangssignal umwandelbar ist, sowie mit einer Signalprozessoreinheit (11), durch die höhenstufenaufgelöst Informationen (13) über Eigenschaften von in der Atmosphäre auftretenden Nebel- und/oder Wolkenerscheinungen erzeugbar sind, wobei das Sendesignal nach einer Sendephase (17) für eine Sendepause (18) unterbrochen und der Empfänger während der Sendephase deaktiviert wird und nur in der Sendepause (18) aktiviert ist und wobei mit einer Signalerzeugungseinheit (12) ein Tastsignal (14) erzeugt und einer Ansteuerung wenigstens eines elektronischen Bauteils ausgewählt aus einer Gruppe elektronischer Bauteile, die einen Leistungsverstärker (4) des Senders, einen Mikrowellenschalter (7) des Empfängers und einen Niederfrequenzschalter (8) des Empfängers aufweist, zugrunde gelegt wird, so dass eine durch Addition von Sendephase (17) und Sendepause (18) des Sendesignals gebildete Zeitspanne (15) gleich einer Periode der Abtastung des Echound/oder des Empfangssignals im Empfänger ist, **dadurch gekennzeichnet, dass** das Verhältnis von Sendephase (17) zu aus Sendephase (17) und Sendepause (18) gebildeter Gesamtzeitspanne nahezu eins ist, sodass das Sendesignal einem Dauerstrichsignal angenähert wird.

2. Radargerät nach Anspruch 1,
   **dadurch gekennzeichnet, dass** die Sende- und die Empfangsantenne (1a, 1b) in eine Antenne integriert sind und ein Zirkulator (5) als Sende- und Empfangsweiche vorgesehen ist.

3. Radargerät nach Anspruch 1 oder 2,
   **dadurch gekennzeichnet, dass** die Sende- und die Empfangsantenne (1a, 1b) in eine Parabolantenne integriert sind.

4. Radargerät nach Anspruch 2 oder nach Ansprüchen 2 und 3,
   **dadurch gekennzeichnet, dass** der Mikrowellenschalter (7) des Empfängers wenigstens eine PIN-Diode aufweist, Z und dem Zirkulator (5) nachgeschaltet ist.

5. Radargerät nach Anspruch 4,
   **dadurch gekennzeichnet, dass** der Mikrowellenschalter (7) mittels eines Steuersignals (19) der Signalerzeugungseinheit (12) unter Berücksichtigung des Tastsignals (15) steuerbar ist.

6. Radargerät nach Anspruch 2, oder Ansprüchen 2 und 3, oder Anspruch 4,
   **dadurch gekennzeichnet, dass** zwischen dem Zirkulator (5) und dem Mischer (6) ein Empfangsverstärker (10) vorgesehen ist.

7. Radargerät nach einem der Ansprüche 1 bis 6,
   **dadurch gekennzeichnet, dass** das niederfrequente Empfangssignal vom Mischer (6) auf den Niederfrequenzschalter (8) leitbar ist.

8. Radargerät nach Anspruch 7,

**dadurch gekennzeichnet, dass** der Niederfrequenzschalter (8) mittels eines Steuersignals (22) der Signalerzeugungseinheit (12) unter Berücksichtigung des Tastsignals (15) steuerbar ist.

9. Verfahren zur Bestimmung von Nebel- und Wolkenparametern in der Atmosphäre mit Hilfe von Millimeterwellen, bei dem in einem Sender ein frequenzmoduliertes Sendesignal erzeugt und über eine Sendeantenne (1a) ausgesendet wird, bei dem eine Empfangsantenne (1b) ein durch Reflexion des Sendesignals an Flüssigkeitstropfen und/oder an Eiskristallen erzeugtes Echosignal aufnimmt, bei dem das aufgenommene Echosignal einem Mischer (6) zugeleitet wird, durch den das empfangene und von einem Vorverstärker (10) verstärkte Echosignal in ein niederfrequentes Empfangssignal umgewandelt wird und bei dem mit einer Signalprozessoreinheit (11) dass niederfrequente Empfangssignal derart ausgewertet wird, dass höhenstufenaufgelöst Informationen (13) über Eigenschaften von in der Atmosphäre auftretenden Nebel- und/oder Wolkenerscheinungen bereitgestellt werden,
   wobei das Sendesignal nach einer Sendephase (17) für eine Sendepause (18) unterbrochen und der Empfänger während der Sendephase deaktiviert und nur in der Sendepause (18) aktiviert wird und wobei mit einer Signalerzeugungseinheit (12) ein Tastsignal (14) erzeugt und einer Ansteuerung wenigstens eines elektronischen Bauteils ausgewählt aus einer Gruppe elektronischer Bauteile, die einen Leistungsverstärker (4) des Senders, einen Mikrowellenschalter (7) des Empfängers und einen Niederfrequenzschalter (8) des Empfängers aufweist, zugrunde gelegt wird, derart dass die durch Addition der Sendephase (17) und der Sendepause (18) gebildete Zeitspanne gleich einer Periode der Abtastung des Echo- und/oder des Empfangssignals im Empfänger ist,
   **dadurch gekennzeichnet, dass** das Verhältnis von Sendephase (17) zu aus Sendephase (17) und Sendepause (18) gebildeter Gesamtzeitspanne nahezu eins ist, sodass das Sendesignal einem Dauerstrichsignal angenähert wird.

10. Verfahren nach Anspruch 9,
    **dadurch gekennzeichnet, dass** als Sendesignal ein Mikrowellensignal mit einer Leistung von 4W, und einer Frequenz zwischen 35,10 und 35,11 GHz erzeugt wird.

11. Verfahren nach Anspruch 9 oder 10,
    **dadurch gekennzeichnet, dass** das Sendesignal durch eine in der Signalerzeugungseinheit (12) erzeugte Modulationsspannung sägezahnförmig moduliert wird.

12. Verfahren nach einem der Ansprüche 9 bis 11,

**dadurch gekennzeichnet, dass** das Sendesignal bevor es der Sendeantenne (1a) zugeleitet wird von dem Leistungsverstärker (4) verstärkt wird, der unter Zugrundelegung des von der Signalerzeugungseinheit (12) erzeugten Tastsignals (14) geschaltet wird.

13. Verfahren nach Anspruch 12,
    **dadurch gekennzeichnet, dass** das Tastsignal (14) um eine Totzeit (26) verzögert auf einen Schalteingang des Leistungsverstärkers (4) geleitet wird.

14. Verfahren nach einem der Ansprüche 9 bis 13,
    **dadurch gekennzeichnet, dass** während der Sendephase (17) ein Signalweg für das Sendesignal zur Sendeantenne (1a) durchgeschaltet wird und ein Signalweg vom Sender zum Empfänger gesperrt wird, wobei auf dem Signalweg vom Sender zur Sendeantenne (1a) eine Dämpfung um ein Vielfaches niedriger eingestellt wird als auf dem Signalweg zwischen Sender und Empfänger.

15. Verfahren nach einem der Ansprüche 9 bis 14,
    **dadurch gekennzeichnet, dass** der Mikrowellenschalter (7) des Empfängers vor dem Vorverstärker (10) angeordnet ist, und der Mikrowellenschalter (7) während einer Sendepause für das Echosignal durchgeschaltet wird.

16. Verfahren nach Anspruch 15,
    **dadurch gekennzeichnet, dass** der vor dem Vorverstärker (10) angeordnete Mikrowellenschalter (7) unter Zugrundelegung des von der Signalerzeugungseinheit (12) erzeugten Tastsignals (14) geschaltet wird.

17. Verfahren nach Anspruch 14 oder 15,
    **dadurch gekennzeichnet, dass** der vor dem Vorverstärker (10) angeordnete Mikrowellenschalter (7) vor Ende der Sendephase (17) durchgeschaltet wird.

18. Verfahren nach einem der Ansprüche 9 bis 17,
    **dadurch gekennzeichnet, dass** das vom Mischer (6) erzeugte niederfrequente Empfangssignal auf den Niederfrequenzschalter (8) geleitet wird.

19. Verfahren nach Anspruch 18,
    **dadurch gekennzeichnet, dass** der Niederfrequenzschalter (8) unter Zugrundelegung des von der Signalerzeugungseinheit (12) erzeugten Tastsignals (14) geschaltet wird.

20. Verfahren nach Anspruch 18 oder 19,
    **dadurch gekennzeichnet, dass** der Niederfrequenzschalter (8) um eine Sicherheits-Totzeit (25) verzögert nach Ende der Sendephase (17) für das niederfrequente Empfangssignal durchgeschaltet wird.

**Claims**

1. A radar apparatus for investigating fog and clouds in the atmosphere, having a transmitter for generating a frequency-modulated transmission signal being sent out via a transmitting antenna (1a), having a receiver being supplied with an echo signal via a receiving antenna (1b), which signal is generated by reflection of the transmission signal at liquid droplets and/or at ice crystals, and having a mixer (6), to which the received echo signal, amplified by a pre-amplifier (10), can be supplied and by which the amplified echo signal can be converted into a low-frequency received signal, as well as having a signal processor unit (11), with which information (13), resolved by altitude levels, about characteristics of fog and/or cloud phenomena occurring in the atmosphere can be generated,
   wherein, after a transmission phase (17), the transmission signal is interrupted for a transmission pause (18) and the receiver is deactivated during the transmission phase and is only activated during the transmission pause (18), and wherein, using a signal generation unit (12), a sampling signal (14) is generated and taken as the basis for controlling at least one electronic component selected from a group of electronic components including a power amplifier (4) of the transmitter, a microwave switch (7) of the receiver, and a low-frequency switch (8) of the receiver, so that a time span (15) formed by addition of transmission phase (17) and transmission pause (18) of the transmission signal is equal to a period of sampling of the echo and/or the received signal in the receiver,
   **characterized in that** the ratio of the transmission phase (17) to the overall timespan formed by transmission phase (17) and transmission pause (18) is almost one, so that the transmission signal is approximated to a continuous wave signal.

2. The radar apparatus according to claim 1,
   **characterized in that** the transmitting and the receiving antenna (1a, 1b) are integrated into one antenna and a circulator (5) is provided as a transmitter and receiver duplexer.

3. The radar apparatus according to claim 1 or 2,
   **characterized in that** the transmitting and the receiving antenna (1a, 1b) are integrated into a parabolic antenna.

4. The radar apparatus according to claim 2 or according to claims 2 and 3,
   **characterized in that** the microwave switch (7) of the receiver has at least one PIN diode and is arranged downstream of the circulator (5).

5. The radar apparatus according to claim 4,

**characterized in that** the microwave switch (7) can be controlled by means of a control signal (19) of the signal generation unit (12) taking the sampling signal (15) into account.

6. The radar apparatus according to claim 2 or claims 2 and 3 or claim 4,
**characterized in that** a receive amplifier (10) is provided between the circulator (5) and the mixer (6).

7. The radar apparatus according to any one of claims 1 to 6,
**characterized in that** the low-frequency received signal can be guided from the mixer (6) onto the low-frequency switch (8).

8. The radar apparatus according to claim 7,
**characterized in that** the low-frequency switch (8) can be controlled by means of a control signal (22) of the signal generation unit (12) taking the sampling signal (15) into account.

9. A method for determining fog and cloud parameters in the atmosphere by means of millimeter waves, in which a frequency-modulated transmission signal is generated in a transmitter and sent out via a transmitting antenna (1a), in which a receiving antenna (1b) receives an echo signal generated by reflection of the transmission signal at liquid droplets and/or at ice crystals, in which the received echo signal is supplied to a mixer (6), by which the received echo signal, amplified by a pre-amplifier (10), is converted into a low-frequency received signal, and in which, using a signal processor unit (11), the low-frequency received signal is evaluated such that information (13), resolved by altitude levels, about characteristics of fog and/or cloud phenomena occurring in the atmosphere is provided,
wherein, after a transmission phase (17), the transmission signal is interrupted for a transmission pause (18) and the receiver is deactivated during the transmission phase and is only activated during the transmission pause (18), and wherein, using a signal generation unit (12), a sampling signal (14) is generated and taken as the basis for controlling at least one electronic component selected from a group of electronic components including a power amplifier (4) of the transmitter, a microwave switch (7) of the receiver, and a low-frequency switch (8) of the receiver, such that the time span formed by addition of the transmission phase (17) and the transmission pause (18) is equal to a period of sampling of the echo and/or the received signal in the receiver,
**characterized in that** the ratio of the transmission phase (17) to the overall timespan formed by transmission phase (17) and transmission pause (18) is almost one, so that the transmission signal is approximated to a continuous wave signal.

10. The method according to claim 9,
**characterized in that**, as the transmission signal, a microwave signal with a power of 4 W and a frequency between 35.10 and 35.11 GHz is generated.

11. The method according to claim 9 or 10,
**characterized in that** the transmission signal is modulated in a sawtooth shape by a modulation voltage generated in the signal generation unit (12).

12. The method according to any one of claims 9 to 11,
**characterized in that** the transmission signal, before being supplied to the transmitting antenna (1a), is amplified by the power amplifier (4), which is switched on the basis of the sampling signal (14) generated by the signal generation unit (12).

13. The method according to claim 12,
**characterized in that** the sampling signal (14) is guided onto a switching input of the power amplifier (4) delayed by a deadtime (26).

14. The method according to any one of claims 9 to 13,
**characterized in that**, during the transmission phase (17), a signal path for the transmission signal to the transmitting antenna (1a) is switched through and a signal path from transmitter to receiver is blocked, wherein, on the signal path from the transmitter to the transmitting antenna (1a), an attenuation is set many times lower than on the signal path between transmitter and receiver.

15. The method according to any one of claims 9 to 14,
**characterized in that** the microwave switch (7) of the receiver is arranged in front of the pre-amplifier (10) and the microwave switch (7) is switched through for the echo signal during a transmission pause.

16. The method according to claim 15,
**characterized in that** the microwave switch (7) arranged in front of the pre-amplifier (10) is switched on the basis of the sampling signal (14) generated by the signal generation unit (12).

17. The method according to claim 14 or 15,
**characterized in that** the microwave switch (7) arranged in front of the pre-amplifier (10) is switched through prior to the end of the transmission phase (17).

18. The method according to any one of claims 9 to 17,
**characterized in that** the low-frequency received signal generated by the mixer (6) is guided onto the low-frequency switch (8).

19. The method according to claim 18,
**characterized in that** the low-frequency switch (8) is switched on the basis of the sampling signal (14) generated by the signal generation unit (12).

**20.** The method according to claim 18 or 19, **characterized in that** the low-frequency switch (8) is switched through for the low-frequency received signal after the end of the transmission phase (17) delayed by a safety deadtime (25).

**Revendications**

**1.** Radar pour l'étude du brouillard et des nuages dans l'atmosphère, comportant un émetteur pour la production d'un signal d'émission modulé en fréquence, qui est émis par une antenne d'émission (1a), un récepteur auquel est envoyé, par l'intermédiaire d'une antenne de réception (1b), un signal d'écho produit par réflexion dudit signal d'émission sur des gouttelettes de liquide et/ou sur des cristaux de glace, et qui comporte un mélangeur (6) auquel ledit signal d'écho reçu et amplifié par un préamplificateur (10) peut être amené et au moyen duquel ledit signal d'écho amplifié peut être converti en un signal de réception à basse fréquence, et comportant une unité de traitement de signaux (11) au moyen de laquelle des informations (13) sur les propriétés des phénomènes de brouillard et/ou de nuages se produisant dans l'atmosphère peuvent être générées de manière résolue selon l'étagement altitudinal, le signal d'émission étant interrompu après une phase d'émission (17) pour une pause d'émission (18) et le récepteur étant désactivé pendant ladite phase d'émission et n'étant activé que pendant ladite pause d'émission (18), et un signal d'échantillonnage (14) étant généré au moyen d'unité génératrice de signaux (12) et servant de base pour commander au moins un composant électronique choisi dans un groupe de composants électroniques comportant un amplificateur de puissance (4) de l'émetteur, un commutateur micro-ondes (7) du récepteur et un commutateur basse fréquence (8) du récepteur, de sorte qu'une période de temps (15) formée par l'addition de la phase d'émission (17) et de la pause d'émission (18) dudit signal d'émission soit égale à une période d'échantillonnage dudit signal d'écho et/ou dudit signal de réception dans le récepteur, **caractérisé en ce que** le rapport entre ladite phase d'émission (17) et ladite période de temps totale formée par ladite phase d'émission (17) et ladite pause d'émission (18) est presque égal à un, de sorte que ledit signal d'émission soit approximé à un signal d'onde continue.

**2.** Radar selon la revendication 1, **caractérisé en ce que** lesdites antennes d'émission et de réception (1a, 1b) sont intégrées à une seule antenne et qu'un circulateur (5) est prévu comme duplexeur d'émission et de réception.

**3.** Radar selon la revendication 1 ou 2, **caractérisé en ce que** lesdites antennes d'émission et de réception (1a, 1b) sont intégrées dans une antenne parabolique.

**4.** Radar selon la revendication 2 ou selon revendications 2 et 3, **caractérisé en ce que** ledit commutateur micro-ondes (7) du récepteur possède au moins une diode PIN et est connecté en aval du circulateur (5).

**5.** Radar selon la revendication 4, **caractérisé en ce que** ledit commutateur micro-ondes (7) peut être commandé au moyen d'un signal de commande (19) de ladite unité génératrice de signaux (12) en tenant compte dudit signal d'échantillonnage (15).

**6.** Radar selon la revendication 2 ou selon revendications 2 et 3 ou selon la revendication 4, **caractérisé en ce qu'**un amplificateur de réception (10) est prévu entre ledit circulateur (5) et ledit mélangeur (6).

**7.** Radar selon l'une des revendications 1 à 6, **caractérisé en ce que** ledit signal de réception à basse fréquence peut être conduit dudit mélangeur (6) à un commutateur basse fréquence (8).

**8.** Radar selon la revendication 7, **caractérisé en ce que** ledit commutateur basse fréquence (8) peut être commandé au moyen d'un signal de commande (22) de ladite unité génératrice de signaux (12) en tenant compte dudit signal d'échantillonnage (15).

**9.** Procédé pour déterminer les paramètres du brouillard et des nuages dans l'atmosphère à l'aide d'ondes millimétriques, dans lequel un signal d'émission modulé en fréquence est généré dans un émetteur et est émis par une antenne d'émission (1a), dans lequel une antenne de réception (1b) capte un signal d'écho généré par réflexion dudit signal d'émission sur des gouttelettes de liquide et/ou sur des cristaux de glace, dans lequel ledit signal d'écho capté est envoyé à un mélangeur (6) par lequel ledit signal d'écho reçu et amplifié par un préamplificateur (10) est converti en un signal de réception à basse fréquence et dans lequel une unité de traitement de signaux (11) évalue ledit signal de réception à basse fréquence de telle sorte que des informations (13) sur les propriétés des phénomènes de brouillard et/ou de nuages se produisant dans l'atmosphère soient fournies de manière résolue selon l'étagement altitudinal, ledit signal d'émission étant interrompu après une phase d'émission (17) pour une pause d'émission (18) et ledit récepteur étant désactivé pendant ladite phase d'émission et n'étant activé que dans la pause d'émission (18), et un signal d'échantillonnage (14) étant généré au moyen d'une unité génératrice de signal (12) et servant de base pour commander au moins un composant électronique choisi dans un groupe de composants électroniques comprenant un amplificateur de puissance (4) de l'émetteur, un commutateur micro-ondes (7) du récepteur et un commutateur basse fréquence (8) du récepteur, de telle sorte que la période de temps formée par l'addition de la phase d'émission (17) et de la pause d'émission (18) soit égale à une période d'échantillonnage du signal d'écho et/ou du signal de réception dans le récepteur,
**caractérisé en ce que** le rapport entre ladite phase d'émission (17) et ladite période de temps totale formée par ladite phase d'émission (17) et ladite pause d'émission (18) est presque égal à un, de sorte que ledit signal d'émission soit approximé à un signal d'onde continue.

10. Procédé selon la revendication 9,
**caractérisé en ce qu'**un signal micro-ondes d'une puissance de 4W et d'une fréquence comprise entre 35,10 et 35,11 GHz est généré comme signal d'émission.

11. Procédé selon la revendication 9 ou 10,
**caractérisé en ce que** ledit signal d'émission est modulé en forme de dents de scie par une tension de modulation générée dans ladite unité génératrice de signaux (12).

12. Procédé selon l'une des revendications 9 à 11,
**caractérisé en ce que** ledit signal d'émission, avant d'être fourni à l'antenne d'émission (1a), est amplifié par un amplificateur de puissance (4) qui est commuté sur la base dudit signal d'échantillonnage (14) généré par ladite unité génératrice de signaux (12).

13. Procédé selon la revendication 12,
**caractérisé en ce que** ledit signal d'échantillonnage (14) est transmis à une entrée de commutation dudit amplificateur de puissance (4) de manière temporisée d'un temps mort (26).

14. Procédé selon l'une des revendications 9 à 13,
**caractérisé en ce que**, pendant ladite phase d'émission (17), un chemin de signal pour ledit signal d'émission est établi vers ladite antenne d'émission (1a) et un chemin de signal de l'émetteur au récepteur est interrompu, une atténuation étant réglée sur le chemin de signal de l'émetteur à ladite antenne d'émission (1a) et plusieurs fois inférieure que sur le chemin de signal entre l'émetteur et le récepteur.

15. Procédé selon l'une des revendications 9 à 14,
**caractérisé en ce qu'**un commutateur micro-ondes (7) du récepteur est disposé en amont dudit préamplificateur (10) et que ledit commutateur micro-ondes est commuté pendant une pause d'émission pour ledit signal d'écho.

16. Procédé selon la revendication 15,
**caractérisé en ce que** ledit commutateur micro-ondes (7) disposé en amont dudit préamplificateur (10) est commuté sur la base dudit signal d'échantillonnage (14) généré par ladite unité génératrice de signaux (12).

17. Procédé selon la revendication 14 ou 15,
**caractérisé en ce que** ledit commutateur micro-ondes (7) disposé en amont dudit préamplificateur (10) est commuté avant la fin de ladite phase d'émission (17).

18. Procédé selon l'une des demandes 9 à 17,
**caractérisé en ce que** ledit signal de réception à basse fréquence généré par ledit mélangeur (6) est transmis audit commutateur basse fréquence (8).

19. Procédé selon la revendication 18,
**caractérisé en ce que** ledit commutateur basse fréquence (8) est commuté sur la base dudit signal d'échantillonnage (14) généré par ladite unité génératrice de signaux (12).

20. Procédé selon la revendication 18 ou 19,
**caractérisé en ce que** ledit commutateur basse fréquence (8) est commuté de manière temporisée d'un temps mort de sécurité (25) après la fin de ladite phase d'émission (17) pour ledit signal de réception à basse fréquence.

**Fig. 1**

**Fig. 2**

a)

b)

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10305139 B4
- WO 03044559 A1
- US 20030117311 A1